# FASCICULE DE BREVET EUROPEEN

(11) **EP 2 016 677 B1**
(45) Date de publication et mention de la délivrance du brevet: **30.01.2013**
(21) Numéro de dépôt: 07731958.0
(22) Date de dépôt: 27.04.2007
(51) Int. Cl.: H03K 3/037

(54) **COMPOSANT MUNI D'UN CIRCUIT INTÉGRÉ COMPORTANT UN CRYPTO-PROCESSEUR ET PROCÉDÉ D'INSTALLATION**
MIT EINER INTEGRIERTEN SCHALTUNG, DIE EINEN KRYPTOPROZESSOR UMFASST, AUSGESTATTETE KOMPONENTE UND INSTALLATIONSVERFAHREN DAFÜR
COMPONENT PROVIDED WITH AN INTEGRATED CIRCUIT COMPRISING A CRYTOPROCESSOR AND METHOD OF INSTALLATION THEREOF

(30) Priorité: 10.05.2006 FR 0651681
(43) Date de publication de la demande: 21.01.2009
(73) Titulaire: European Aeronautic Defence and Space Company EADS France, 75781 Paris Cedex 16 (FR)
(72) Inventeur: BUARD, Nadine, 92190 Meudon (FR); MILLER, Florent, 75005 Paris (FR); LAHOUD, Imad, 75009 Paris (FR); RUBY, Cédric, 69006 LYON (FR)
(74) Mandataire: Schmit, Christian Norbert Marie
(86) Numéro de dépôt international: PCT/FR2007/051185
(87) Numéro de publication internationale: WO 2007/128932

(56) Documents cités:
- US-A- 5 672 918
- US-A- 6 064 555
- JOHNSTON A H ET AL: "Latchup in Integrated Circuits from Energetic Protons <crossref idref=fn1 typeref=fnote>The research in this paper was carried out by the Jet Propulsion Laboratory, California Institute of Technology, under contract with the National Aeronautics and Space Administration, Code Q, under the NASA Micro" décembre 1997 (1997-12), IEEE TRANSACTIONS ON NUCLEAR SCIENCE, IEEE SERVICE CENTER, NEW YORK, NY, US, PAGE(S) 2367-2377 , XP011041051 ISSN: 0018-9499 le document en entier

## Description

La présente invention a pour objet un composant réalisé en entier ou en partie sous la forme d'un circuit intégré et disposant d'un crypto-processeur ainsi que son procédé d'installation. Le composant de l'invention est muni de moyens pour prévenir le dévoilement de ses secrets de cryptage. L'invention vise plus particulièrement les composants crypto-processeurs, mais elle pourrait aussi concerner les circuits intégrés de tous types, dans lesquels on cherche à empêcher qu'ils puissent fonctionner d'une manière inadéquate, que ce fonctionnement inadéquat résulte d'une tentative délibérée d'en pervertir le fonctionnement, ou de la survenance inopinée d'une agression extérieure (électrique, électromagnétique, thermique, particule ou autre).

La protection des données mémorisées dans un composant électronique se fait depuis toujours par chiffrement à l'aide d'une clé. La clé doit impérativement demeurer secrète.

Dans un composant électronique, un crypto-processeur est un processeur dédié aux opérations de cryptographie. Il contient dans sa partie mémoire une ou des clés qui doivent rester secrètes, et qui lui servent à chiffrer et ou déchiffrer les informations qu'il reçoit. Il est composé entre autres d'une mémoire non volatile qui stocke la clé de façon permanente quand il est hors tension, d'une mémoire tampon volatile (par exemple de type SRAM ou bascule D) dans laquelle la clé est chargée par le système d'exploitation (s'il existe) lors de la mise sous tension, et d'un circuit logique de type microcontrôleur ou microprocesseur capable d'effectuer les opérations de chiffrement et déchiffrement des messages à l'aide de la clé secrète.

Dans les composants électroniques, l'information est stockée et transite sous forme de charges, qui sont piégées ou dirigées au sein du matériau semi-conducteur, du silicium, grâce à l'action de champs électriques. Un transistor MOS à la base de la plupart des circuits logiques et numériques, est en fait un interrupteur laissant ou non transiter des charges entre sa source et son drain, en fonction de la tension appliquée sur sa grille.

Une nouvelle classe de menace est apparue récemment, visant à extraire des informations contenues dans un composant crypto-processeur en y injectant des fautes tout en analysant le comportement obtenu: Les méthodes d'injection de fautes utilisables sont diverses (élévation de la température du composant, élévation de la tension d'alimentation du composant, impulsions transitoires, particules ...). Les méthodes qui sont aujourd'hui analysées comme étant les plus dangereuses sont celles permettant d'injecter des fautes dans les composants à des localisations contrôlées, par exemple dans une partie de mémoire à accès aléatoire statique, SRAM, où est stockée une clé de chiffrement. C'est le cas des attaques par laser ou par micro faisceaux d'ions.

L'attaque d'un crypto-processeur par injection de fautes consiste à injecter des charges localement de façon à modifier ou masquer l'information stockée ou en transit. L'analyse de la réponse du crypto-processeur suite à l'injection de fautes fournit aux pirates des indications leurs permettant de réduire le nombre de combinaisons et identifier plus rapidement la clé. Une telle analyse est d'autant plus aisée que l'attaque est précise, aussi bien spatialement que temporellement. Différentes techniques d'injection de fautes existent donc, avec des difficultés de mise en oeuvre variables, les plus efficaces étant heureusement les plus difficiles à mettre en oeuvre. Pour mémoire, un rappel des agressions possibles contre les circuits intégrés est mentionné dans le document "Memories: a survey of their secure uses in smart cards" dû à Michael Neve, Eric Peeters, David Samyde et Jean-Jacques Quisquater; http://www.dice.ucl.ac.be/crypto et édité par Second International IEEE Security in Storage, Workshop - Proceedings of SISW 2003.

Les techniques les plus simples injectent des fautes de façon aléatoire dans le composant : c'est le cas d'une attaque par élévation de température, ou ondes électromagnétiques (radar, micro-onde, radio), ou par particules (ions, neutrons ou protons). Dans ces trois cas, l'attaque perturbe le composant dans son ensemble, et s'il est possible de déterminer une zone, il n'est pas possible de cibler un bit ni même plusieurs bits. Néanmoins, avec un traitement logiciel et mathématique très poussé, il semble qu'il soit possible d'exploiter les résultats de l'attaque. L'attaque est très facile à mettre en oeuvre car elle ne nécessite aucun accès particulier, et peut être menée à distance.

Viennent ensuite les attaques par l'intermédiaire des entrées/sortie du circuit, en perturbant les tensions nominales au moyen d'un générateur de tension. Ces attaques peuvent être menées en phase (temporellement) par rapport aux cycles de fonctionnement de l'horloge du circuit. La conséquence de l'attaque est toujours assez aléatoire, ce qui signifie que le nombre de combinaisons à tenter pour extraire la clé reste élevé, mais cette technique est assez facile à mettre en oeuvre si on a accès au circuit.

Enfin, des techniques permettent d'injecter des fautes à des instants choisis et à des localisations parfaitement contrôlées (en théorie au bit près), ce qui signifie qu'on est alors capable par exemple de venir modifier un par un les bits contenant la clé, puis le suivant, et ainsi de suite, ou encore d'interrompre une opération de déchiffrement. C'est le cas des attaques par laser ou par micro faisceaux d'ions. Ces techniques sont difficiles à mettre en oeuvre car elles nécessitent un accès au composant, c'est à dire l'ouverture du boîtier du composant et la mise à nu du circuit intégré, de la puce. Pour se défendre de ces attaques, les fabricants mettent en place des contre-mesures plus ou moins efficaces pour empêcher la décapsulation.

Le but de l'invention est de protéger les composants contre de telles attaques.

Le déclenchement d'un thyristor parasite, dit latchup, et respectivement le déclenchement d'un transistor bipolaire parasite, dit snapback, sont des mécanismes existant de façon inhérente dans tout composant en circuit intégré de type à implantation complémentaire, CMOS, ou respectivement non complémentaire. Ils résultent de la mise en conduction d'un thyristor, ou respectivement d'un transistor bipolaire horizontal, parasites, suite à une introduction locale de charges dans le composant. Le courant d'alimentation du composant augmente alors brusquement, et, du fait du courant qui le parcourt et ou de la chute de tension d'alimentation qui en résulte, le composant n'est plus fonctionnel. En l'absence de limitation en courant, il peut y avoir destruction du circuit par effet thermique, et il est préférable de prévoir une limitation en courant sur l'alimentation du circuit. De toutes façons, le circuit ne redevient fonctionnel qu'après l'arrêt de l'alimentation puis sa remise sous tension. Dans la suite du texte nous parlerons de déclenchement parasite lorsque nous évoquerons le déclenchement de l'un ou l'autre de ces phénomènes : déclenchement d'un thyristor parasite : latchup et déclenchement d'un transistor bipolaire parasite : snapback. Ces deux phénomènes sont décrits dans le document publié en 1999 par Fairchild Semiconductor Corporation et intitulé Understanding Latch-up in Advanced CMOS Logic. Un exemple pour un circuit de protection contre le latchup est donné dans le document US 6,064,555.

Selon la position de contacts dans le composant, le niveau de charge déclenchant les structures parasites (appelé seuil de latchup ou seuil de snapback) peut-être très variable. Les fabricants de composants essaient donc en général d'élever au maximum ce niveau, dans la mesure où le mécanisme peut être déclenché par un environnement radiatif naturel (particules), par des décharges électrostatiques ou même par du bruit sur les entrées ou sorties. Néanmoins, il semble plus facile pour un fondeur (fabricant de composants) de concevoir une technologie sensible au latchup/snapback qu'une technologie insensible.

En règle générale, on observe qu'à chaque saut de génération les premiers lots fabriqués sont sensibles au latchup. Les fondeurs corrigent ensuite les procédés de fabrication ou l'architecture des circuits des composants pour que ces composants aient des seuils de déclenchement plus élevés. C'est ainsi que de nombreux composants sensibles au latchup se trouvent disponibles sur le marché commercial, ce qui oblige les utilisateurs de ces composants en environnement radiatif sévère (comme par exemple l'environnement spatial) à effectuer un tri systématique des composants commerciaux.

Des études relatives à la susceptibilité des circuits intégrés à souffrir des latchup ont été publiées
- dans un article intitulé "Extreme latchup susceptibility in modern commercial off the shelf (COTS) monolithic 1 M and 4 M CMOS static random acces memory (SRAM) devices" dû à Thomas E. Page et Joseph M. Benedetto et publié dans Radiation Effects Data Workshop, 2005. IEEE les 11-15 Juillet 2005, pages 1 à 7
- par IEEE Transactions on Nuclear Science, Vol 50. N°3, June 2003. dans un article intitulé "Destructive single event effect in semiconductor devices and ICs" de Fred W. Sexton,
- ainsi que dans "Proposal for solid state particle detection based on latchup effect" dû à A. Gabrielli, et publié dans Electronic Letters, 26 mai 2005 Vol. 41, N°11.

L'injection de fautes est une injection locale de charges dans un circuit qui vient perturber son fonctionnement. On peut définir la quantité de charges minimale nécessaire au déclenchement de la perturbation comme le seuil de perturbation du circuit. Le seuil de latchup ou de snapback est défini comme la quantité minimale de charge à injecter localement pour déclencher le mécanisme de latchup ou de snapback.

Dans l'invention, pour résoudre le problème de la protection des composants en circuits intégrés à crypto-processeur, on choisit d'exploiter cet effet pour protéger les informations contenues dans un composant vis à vis des injections de fautes. En effet, si un composant à crypto-processeur dans son ensemble (ou du moins les parties contenant la clé de façon transitoire) est composé de circuits choisis pour être délibérément sensibles au latchup, ou au snapback, alors, avec un seuil de déclenchement plus bas que le seuil de perturbation des circuits par injection de fautes, le composant s'auto-protège. Dans le cas d'une injection de fautes (c'est-à-dire de charges) par quelque moyen que ce soit, la structure parasite se déclenche. Ce déclenchement conduit à une augmentation brutale du courant d'alimentation du circuit.

Ce courant très important peut détériorer définitivement le composant en circuit intégré. Pour éviter ce dernier inconvénient, on prévoit alors un simple circuit de détection du latchup (par mesure de cette augmentation du courant d'alimentation du composant). Par exemple, ce circuit de détection est du type de celui décrit dans le dernier article cité ci-dessus. Ce circuit de détection permet alors de mettre en service un circuit de limitation de courant pour ne pas détruire le composant. Le circuit de limitation de courant maintient la tension d'alimentation des parties internes du circuit à une tension inférieure à celle nécessaire pour le faire fonctionner. Le composant n'est donc plus fonctionnel jusqu'à réinitialisation, rendant toute extraction de données impossible. Une telle solution revient en fait à utiliser le composant crypto-processeur lui-même comme détecteur instantané de l'attaque.

L'invention a donc pour objet un composant en circuit intégré comportant un crypto-processeur, caractérisé en ce qu'il comporte une ou plusieurs structures internes de thyristors parasites et/ou de transistors bipolaires parasites susceptibles de se déclencher et en ce qu'un seuil d'énergie de déclenchement des structures parasites, thyristors parasites et/ou transistors bipolaires parasites, est inférieur à une quantité d'énergie nécessaire pour faire changer d'état une bascule du composant.

Elle a également pour objet un procédé d'installation d'un composant en circuit intégré à crypto-processeur, caractérisé en ce qu'il comporte une opération de sélection du composant dans un lot de composants, le critère de cette sélection étant une susceptibilité particulière du composant au déclenchement de thyristors parasites (latchup) ou au déclenchement de transistors bipolaires parasites (snapback), cette susceptibilité étant définie par rapport à un seuil de déclenchement.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1: une représentation schématique d'un composant avec circuit intégré selon l'invention;
- Figure 2, la représentation classique d'un phénomène de déclenchement d'un thyristor parasite;
- Figures 3a, 3b et 3c: une coupe classique d'un circuit de déclenchement parasite, et sa représentation schématique, et une représentation classique du phénomène de déclenchement d'un transistor bipolaire parasite respectivement ;
- Figure 4: illustration du niveau de protection du composant lorsque les niveaux de seuil en énergie relatifs au déclenchement des structures parasites et au changement d'état d'une bascule par injection de fautes sont différents.

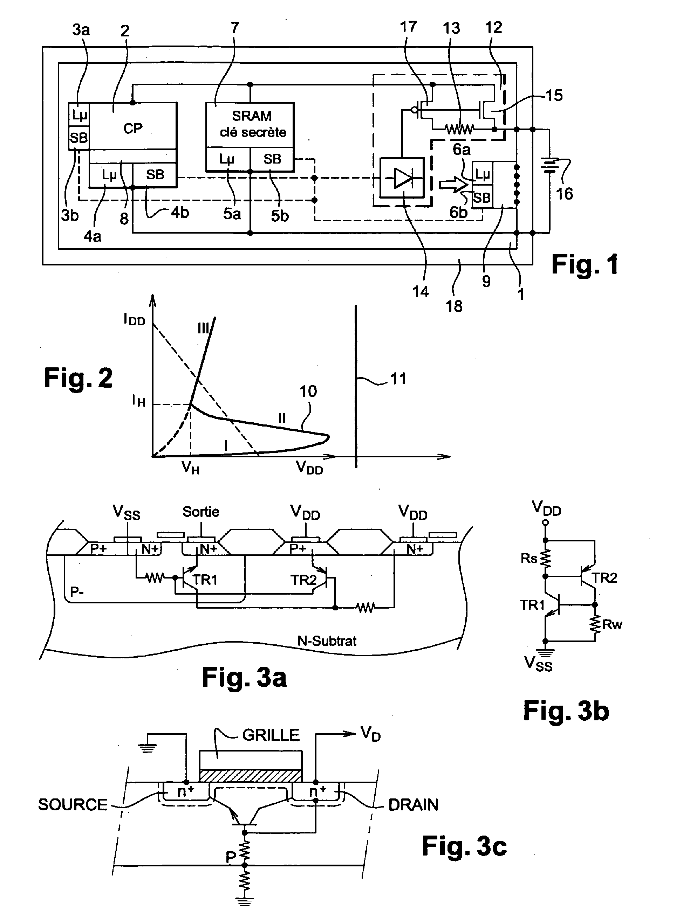

La figure 1 montre un composant 1 muni d'un circuit intégré électronique selon l'invention. Le composant peut être monolithique ou hybride. L'ensemble du composant 1 ou chacune de ses parties est fabriqué, selon cette technologie des circuits intégrés par des implantations d'impuretés, des diffusions de métallisations et des oxydations, toutes sélectives, dans un cristal semi-conducteur (voire une plaque de matériau semi-conducteur amorphe). Le matériau semi-conducteur est principalement du silicium, mais il pourrait être du germanium ou autre. L'architecture des zones d'implantation, de métallisation et d'oxydation forme des circuits électroniques de fonctionnalités différentes. Le composant 1 de l'invention possède ainsi essentiellement un circuit crypto-processeur 2. Selon une caractéristique essentielle de l'invention, le composant 1 comporte des structures de thyristors parasites LU (pour latchup) et ou de transistors bipolaires parasites (SB pour snapback). Ici on a représenté quatre structures de ce type identifiées 3a à 6b selon la localisation qu'ils occupent dans le composant 1. En pratique, les zones de déclenchement 3a à 6b se trouvent localisées au niveau des transistors des circuits intégrés. Typiquement, ces structures 5a 5b de thyristors parasites et/ou de transistors bipolaires parasites peuvent se trouver au sein même des motifs élémentaires d'une zone mémoire 7, de type mémoire aléatoire statique, SRAM du composant 1.

Ou bien, ces structures 4a 4b de thyristors parasites et/ou de transistors bipolaires parasites peuvent se trouver au sein même des motifs élémentaires d'une zone mémoire tampon 8 du composant 1. La zone tampon est en général un registre du crypto-processeur 2, et en est très proche. Ou bien, ces structures 3a 3b de thyristors parasites et/ou de transistors bipolaires parasites peuvent se trouver au sein même des cellules d'une zone combinatoire du composant. Typiquement dans ce cas les circuits 3a et ou 3b sont situés dans la zone des circuits du crypto-processeur 2.

Ou bien ces structures 6a 6b de thyristors parasites et/ou de transistors bipolaires parasites peuvent se trouver dans une zone 9 de circuits d'entrées et ou de sorties du composant 1. Tous les moyens d'injection de fautes, de façon localisée ou non, déclenchent de façon inhérente les thyristors parasites (mécanisme de latchup) et/ou les transistors bipolaires parasites (mécanisme de snapback) dans un composant suffisamment sensible puisque c'est la manifestation de la faute (l'introduction de charges) qui le déclenche. Un juste milieu est cependant à trouver pour que le mécanisme ne se déclenche pas de façon intempestive sur du bruit, et nous définirons ici le composant idéal.

Le déclenchement d'un thyristor parasite ou latchup résulte de la mise en conduction d'un thyristor parasite (p-n-p-n) inhérent à la technologie CMOS (et notamment à l'inverseur CMOS). Si une quantité suffisante de charges est déposée dans le substrat et à proximité de la jonction puits/substrat polarisée en inverse, cette structure peut se verrouiller et favoriser le passage d'un fort courant entre l'alimentation et la masse. Le passage de ce courant occasionne alors des dégâts souvent irréversibles au sein de la structure du composant. Si tel est le cas, le composant devient alors définitivement inopérant.

Le déclenchement d'un transistor bipolaire parasite ou snapback a des conséquences assez similaires à celles du latchup. Cette fois la conduction excessive n'est pas due à la mise en conduction d'un thyristor parasite mais à celle du transistor bipolaire horizontal parasite des transistors MOS à effet de champ, MOSFETs. Leurs diffusions correspondent au drain, à la source et au substrat du MOSFET. Un tel phénomène se produit notamment dans les composants NMOS pour lesquels on ne trouve pas de thyristor (du fait de l'absence de PMOS), et de façon réciproque dans un composant PMOS (du fait de l'absence de NMOS), et dans les composants sur substrat isolant (technologie SOI).

Ces phénomènes ont été particulièrement étudiés et observés dans le cas de l'agression naturelle ou non des composants électroniques par des particules de types neutrons, protons, ions lourds (où ils sont qualifiés de SEL, Single Event Latchup pour événement unique de déclenchement d'un thyristor parasite, et SES, Single Event Snapback pour événement unique de déclenchement d'un transistor bipolaire parasite), ou encore des rayonnements gamma. Néanmoins, pour les composants les plus sensibles, ils peuvent également se produire suite à une décharge électrostatique, à une variation un peu brutale d'alimentation ou dans un environnement électromagnétique perturbé.

Si l'on définit le seuil de déclenchement comme la quantité de charge qui doit être introduite localement pour déclencher le phénomène de latchup (déclenchement d'un thyristor parasite) ou de snapback, le crypto-processeur pourra être considéré comme protégé si le seuil de déclenchement du latchup ou de snapback est légèrement inférieur ou égal au seuil de changement d'état d'un bit à protéger dans une bascule, ou plus généralement au seuil de perturbation de n'importe quelle cellule ou fonction élémentaire du circuit.

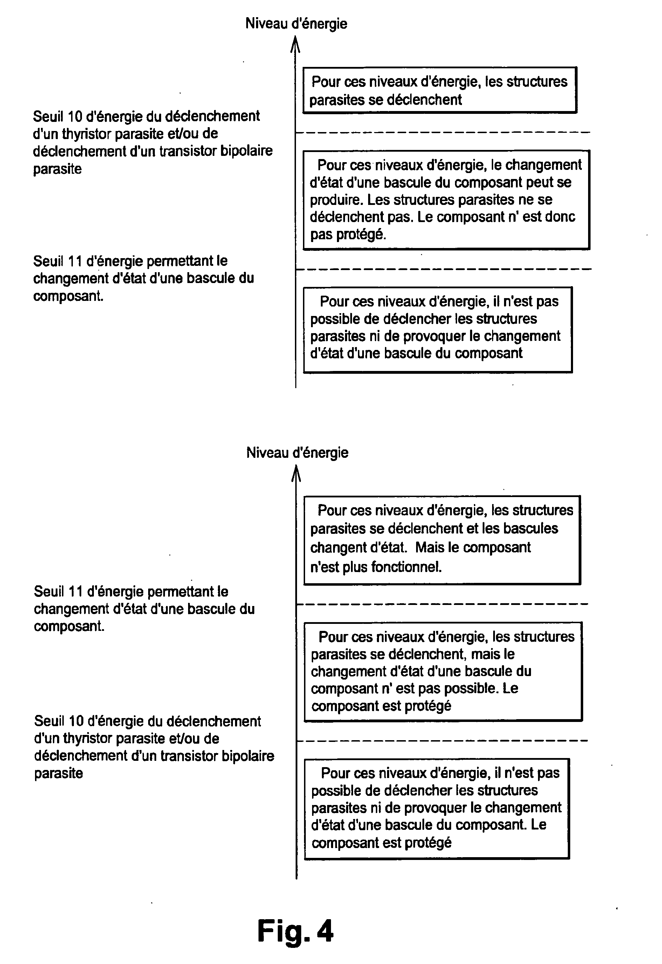

Ainsi, selon l'invention, figure 4, de préférence, un seuil 10 d'énergie (ou de quantité de charges) de déclenchement d'une structure parasite (latchup ou snapback) est inférieur à une quantité 11 d'énergie (ou de charge) nécessaire pour faire changer d'état une bascule du composant, que cette bascule se situe dans une mémoire SRAM ou tampon, dans un registre du crypto-processeur, dans une partie logique combinatoire du crypto-processeur 2, dans un circuit d'entrée sortie 9, ou n'importe où autre part. L'idée de l'invention est que le phénomène de déclenchement des structures parasites se produit, inhibant le fonctionnement du composant 1, avant même que ce dernier n'ait subi une quelconque modification des états électrique de ses circuits. Autrement dit, toute injection de faute commencera par inhiber le composant, à le rendre non fonctionnel, avant même de modifier l'état d'une de ses cellules mémoires à protéger. Dans le cas où le seuil 10 de déclenchement parasite est supérieur au seuil 11 de changement d'état d'une bascule, le composant n'est pas protégé car il existe des niveaux d'énergies pour lesquels il est possible de modifier l'état des bascules sans déclencher les structures parasites. Dans le cas où le seuil 10 de déclenchement parasite est inférieur au seuil 11 de changement d'état d'une bascule, le composant est protégé car son fonctionnement est inhibé avant d'avoir pu modifier l'état de ses bascules

Selon l'invention, de préférence, le composant 1 comporte un circuit 12 limiteur de courant d'alimentation couplé au circuit de déclenchement des structures parasites. Par exemple, d'une manière très schématique, le limiteur 12 de courant comporte une résistance 13 mise en série dans le circuit d'alimentation lorsqu'un déclenchement d'une des structures parasites est détecté. A cet effet, un détecteur de courant 14 est relié, couplé d'une manière ou d'une autre aux circuits 3a à 6b. Lorsque le détecteur 14 ne détecte pas, il provoque la conduction d'un transistor 15 reliant en série une alimentation 16 aux circuits 2, 7 et autres du composant 1. Lorsqu'un déclenchement parasite est détecté, un transistor 17 complémentaire du transistor 15 met en service la résistance 13 dans le parcours d'alimentation. Il en résulte deux effets. D'une part le composant 1 n'est pas détruit, puisque le courant qui le parcourt est limité par la résistance 13. D'autre part, la tension utile en aval de la résistance 13 devient si basse que le composant 1 n'est plus fonctionnel.

Le limiteur 12 est tel qu'une fois le circuit de déclenchement déclenché, le composant n'est plus fonctionnel et son alimentation doit être réinitialisée pour qu'il fonctionne de nouveau.

La fabrication d'un tel composant 1 n'est pas difficile. Un fondeur est capable d'ajuster les paramètres de procédé voire de tension d'alimentation pour le concevoir volontairement. Mais on peut même le trouver sur étagère : dans la mesure où les composants électroniques sont testés aux ions lourds avant d'être embarqués sur satellites, et que des bases de données de résultats de tests sous accélérateurs de particules sont disponibles, il suffit de choisir un composant dont le seuil 10 est inférieur au seuil 11, voire de choisir la tension d'alimentation du composant pour qu'il présente cette propriété. Un autre moyen est d'utiliser un banc de test laser pour les identifier. Dans tous les cas, il peut être utile, par exemple par laser, d'identifier la zone sensible du composant et de vérifier que la protection des informations est bien assurée.

Les zones qu'il peut être intéressant de rendre sensibles au latchup ou au snapback sont en particulier : la zone mémoire 7, la zone mémoire tampon 8, la zone combinatoire 2, les entrées sorties 9.

Pour les mémoires SRAM, on trouvera dans l'article "Extreme ..." cité ci-dessus des exemples de références de composants de technologies diverses présentant cette caractéristique. On pourra trouver de même des microcontrôleurs satisfaisants ces conditions. On peut d'ailleurs estimer qu'à l'heure actuelle, pour les technologies 0,18µm et 0,13µm, environ 10% des composants sur le marché présenteront cette caractéristique. Dans l'invention, on tire parti de cette situation en choisissant d'installer dans des cartes mères 18, des cartes à puce 18 ou dans n'importe quel autre appareil 18 un composant 1 ainsi choisi. Le composant 1 est choisi de telle façon que son seuil 10 de déclenchement d'une structure parasite (thyristor parasite ou transistor bipolaire parasite) soit inférieur à un seuil critique 11. Par exemple, on soumet des composants candidats à des tests de fautes avec un niveau énergétique critique d'agression, et on ne retient que ceux de ces composants qui ont montré qu'ils devenaient non fonctionnels. Plus le seuil critique est bas, plus le composant est auto-protégé (mais plus il risque de tomber en panne souvent). Dans un exemple préféré ce seuil est lui-même inférieur au seuil 11 permettant le basculement d'un état électrique du composant 1.

Les figures 3a, 3b et 3c montrent, dans le cas du déclenchement d'un thyristor parasite la présence d'un thyristor parasite n-p-n-p réalisé dans un substrat de type n, et dans le cas du déclenchement d'un transistor bipolaire parasite la présence d'une structure bipolaire parasite dans un transistor MOS.

Dans l'invention, lors de la fabrication, on choisit des paramètres de fabrication, durée d'implantation, température, nature des impuretés, tension électrique d'implantation, susceptibles de favoriser la sensibilité du composant aux déclenchements de structures parasites (thyristors parasites et/ou transistors bipolaires parasites). De préférence, le choix est tel qu'un seuil d'énergie de déclenchement de ces structures parasites est inférieur à une quantité d'énergie nécessaire pour faire changer d'état une bascule du composant. Au besoin, lors de la fabrication ou lors de l'utilisation, on ajuste ces paramètres de fonctionnement (par exemple la tension de polarisation). Le critère de cet ajustement est une susceptibilité du composant au déclenchement des thyristors parasites (latchup) et/ou au déclenchement des transistors bipolaires parasites, cette susceptibilité étant supérieure à un seuil.

Quand un seuil 11 d'énergie permettant le changement d'état d'une bascule du composant est inférieur à un seuil 10 d'énergie du déclenchement d'un thyristor parasite et/ou de déclenchement d'un transistor bipolaire parasite, et pour une énergie inférieure au seuil 11 d'énergie permettant le changement d'état d'une bascule du composant, il n'est pas possible de déclencher les structures parasites ni de provoquer le changement d'état d'une bascule du composant. Pour une énergie entre le seuil 11 d'énergie permettant le changement d'état d'une bascule du composant et le seuil 10 d'énergie du déclenchement d'un thyristor parasite et/ou de déclenchement d'un transistor bipolaire parasite, le changement d'état d'une bascule du composant peut se produire. Les structures parasites ne se déclenchent pas. Le composant n'est donc pas protégé. Pour des niveaux d'énergies supérieurs à un seuil 10 d'énergie du déclenchement d'un thyristor parasite et/ou de déclenchement d'un transistor bipolaire parasite, les structures parasites se déclenchent.

Quand un seuil 11 d'énergie permettant le changement d'état d'une bascule du composant est supérieur à un seuil 10 d'énergie du déclenchement d'un thyristor parasite et/ou de déclenchement d'un transistor bipolaire parasite, et pour des niveaux d'énergies inférieurs au seuil 10 d'énergie du déclenchement d'un thyristor parasite et/ou de déclenchement d'un transistor bipolaire parasite, il n'est pas possible de déclencher les structures parasites ni de provoquer le changement d'état d'une bascule du composant. Le composant est protégé. Pour une énergie comprise entre le seuil 10 d'énergie du déclenchement d'un thyristor parasite et/ou de déclenchement d'un transistor bipolaire parasite et un seuil 11 d'énergie permettant le changement d'état d'une bascule du composant les structures parasites se déclenchent, mais le changement d'état d'une bascule du composant n'est pas possible. Le composant est protégé. Pour des niveaux d'énergies supérieurs au seuil 11 d'énergie permettant le changement d'état d'une bascule du composant, les structures parasites se déclenchent et les bascules changent d'état, mais le composant n'est plus fonctionnel.

## Revendications

1. Composant (1) en circuit intégré comportant un crypto-processeur (2), **caractérisé en ce qu'**il comporte une ou plusieurs structures internes (3a-6b) de déclenchements parasites de type déclenchement d'un thyristor parasite et/ou déclenchement d'un transistor bipolaire parasite et **en ce qu'**un seuil (10) d'énergie de déclenchement des structures parasites, thyristors parasites et/ou transistors bipolaires parasites, est inférieur à une quantité d'énergie (11) nécessaire pour faire changer d'état une bascule du composant.

2. Composant selon la revendication 1, **caractérisé en ce qu'**il comporte un circuit limiteur (12) de courant d'alimentation couplé au circuit de déclenchement des thyristors parasites et/ou de déclenchement des transistors bipolaires parasites de telle façon qu'une fois ce circuit déclenché, le composant n'est plus fonctionnel et son alimentation doit être réinitialisée pour qu'il fonctionne de nouveau.

3. Composant selon l'une des revendications 1 à 2, **caractérisé en ce que** les structures de déclenchement des thyristors parasites et/ou de déclenchement des transistors bipolaires parasites sont situées dans une zone mémoire SRAM (7) du composant.

4. Composant selon l'une des revendications 1 à 3, **caractérisé en ce que** les structures de déclenchement des thyristors parasites et/ou de déclenchement des transistors bipolaires parasites sont situées dans une zone mémoire tampon (8) du composant.

5. Composant selon l'une des revendications 1 à 4, **caractérisé en ce que** les structures de déclenchement des thyristors parasites et/ou de déclenchement des transistors bipolaires parasites sont situées dans une zone combinatoire (2) du composant.

6. Composant selon l'une des revendications 1 à 5, **caractérisé en ce que** les structures de déclenchement des thyristors parasites et/ou de déclenchement des transistors bipolaires parasites sont situées dans une zone (9) de circuits d'entrées et ou de sorties du composant.

7. Procédé d'installation d'un composant (1) en circuit intégré à crypto-processeur (2), **caractérisé en ce qu'**il comporte une opération de sélection du composant dans un lot de composants et/ou un ajustement de ses paramètres de fonctionnement, notamment sa tension de polarisation, le critère de cette sélection et/ou ajustement étant une susceptibilité du composant au déclenchement de thyristors parasites et/ou au déclenchement de transistors bipolaires parasites, cette susceptibilité étant supérieure à un seuil (10), **en ce qu'**il comporte lors de la fabrication, un choix de paramètres susceptibles de favoriser la sensibilité du composant au déclenchement d'un thyristor parasite et/ou déclenchement d'un transistor bipolaire parasite et **en ce que** ce choix est tel qu'un seuil (10) d'énergie de déclenchement d'un thyristor parasite et/ou déclenchement d'un transistor bipolaire parasite est inférieur à une quantité d'énergie (11) nécessaire pour faire changer d'état une bascule du composant.

## Claims

1. An integrated-circuit component (1) comprising a cryptoprocessor (2), **characterised in that** it comprises one or several internal parasitic activation structures (3a-6b) such as structures for activating a parasitic thyristor and/or for activating a parasitic bipolar transistor, and **in that** an activation energy threshold (10) for activating the parasitic structures, parasitic thyristors and/or parasitic bipolar transistors, is lower than a quantity of energy (11) required to cause a flip-flop circuit of the component to change state.

2. A component according to claim 1, **characterised in that** it comprises a power supply current limiter circuit (12) coupled with the circuit for activating the parasitic thyristors and/or parasitic bipolar transistors, so that once this circuit has been activated, the component is no longer operational and the power supply to the component must be reset before the component will again be operational.

3. A component according to one of claims 1 to 2, **characterised in that** the structures for activating the parasitic thyristors and/or for activating the parasitic bipolar transistors are located in an SRAM memory zone (7) of the component.

4. A component according to one of claims 1 to 3, **characterised in that** the structures for activating the parasitic thyristors and/or for activating the parasitic bipolar transistors are located in a buffer memory zone (8) of the component.

5. A component according to one of claims 1 to 4, **characterised in that** the structures for activating the parasitic thyristors and/or for activating the parasitic bipolar transistors are located in a combinational zone (2) of the component.

6. A component according to one of claims 1 to 5, **characterised in that** the structures for activating the parasitic thyristors and/or for activating the parasitic bipolar transistors are located in an input and/or output circuit zone (9) of the component.

7. A method for installing an integrated-circuit component (1) with a cryptoprocessor (2), **characterised in that** it comprises an operation for selecting the component from a batch of components and/or adjusting its functional parameters, in particular its polarisation voltage, the selection criterion and/or adjustment criterion being the susceptibility of the component to the activation of parasitic thyristors and/or to the activation of parasitic bipolar transistors, this susceptibility being higher than a threshold (10), wherein it comprises selecting parameters during production that are likely to increase the component's sensitivity to the activation of a parasitic thyristor and/or to the activation of a parasitic bipolar transistor, and wherein this selection is such that an activation energy threshold (10) for activating a parasitic thyristor and/or for activating a parasitic bipolar transistor is lower than a quantity of energy (11) required to cause a flip-flop circuit of the component to change state.

## Patentansprüche

1. Bauteil (1) in einer integrierten Schaltung umfassend einen Kryptoprozessor (2), **dadurch gekennzeichnet, dass** es eine oder mehrere interne Strukturen (3a-6b) für parasitäre Auslösungen, wie die Auslösung eines parasitären Thyristors und/ oder die Auslösung eines parasitären bipolaren Transistors umfasst, und dadurch, dass ein Energiegrenzwert (10) zur Auslösung der parasitären Strukturen, parasitärer Thyristoren und/ oder parasitärer bipolarer Transistoren kleiner ist als eine Energiemenge (11), die für die Statusänderung einer Kippschaltung des Bauteils nötig ist.

2. Bauteil nach Anspruch 1, **dadurch gekennzeichnet, dass** es einen Begrenzerkreis (12) für den Speisestromkreis umfasst, der an den Kreis zum Auslösen der parasitären Thyristoren und/ oder der parasitären bipolaren Transistoren gekoppelt ist, sodass das Bauteil, sobald dieser Kreis ausgelöst ist, nicht mehr funktionsfähig ist, und seine Versorgung zurückgesetzt werden muss, damit es erneut funktionieren kann.

3. Bauteil nach einem der Ansprüche 1 bis 2, **dadurch gekennzeichnet, dass** sich die Strukturen zum Auslösen der parasitären Thyristoren und/ oder zum Auslösen der parasitären bipolaren Transistoren in einer SRAM Speicherzone (7) des Bauteils befinden.

4. Bauteil nach einem der Ansprüche 1 bis 3, **dadurch gekennzeichnet, dass** sich die Strukturen zum Auslösen der parasitären Thyristoren und/ oder zum Auslösen der parasitären bipolaren Transistoren in einer Pufferspeicherzone (8) des Bauteils befinden.

5. Bauteil nach einem der Ansprüche 1 bis 4, **dadurch gekennzeichnet, dass** sich die Strukturen zum Auslösen der parasitären Thyristoren und/ oder zum Auslösen der parasitären bipolaren Transistoren in einer kombinatorischen Zone (2) des Bauteils befinden.

6. Bauteil nach einem der Ansprüche 1 bis 5, **dadurch gekennzeichnet, dass** sich die Strukturen zum Auslösen der parasitären Thyristoren und/ oder zum Auslösen der parasitären bipolaren Transistoren in einer Zone (9) mit Ein- und Ausgangskreisen des Bauteils befinden.

7. Verfahren zum Installieren eines Bauteils (1) in eine integrierte Schaltung mit Kryptoprozessor (2), **dadurch gekennzeichnet, dass** es einen Vorgang zur Auswahl des Bauteils aus einem Los an Bauteilen und/ oder einer Anpassung seiner Betriebsparameter, vor allem seiner Polarisierungsspannung, umfasst, wobei das Kriterium für diese Auswahl und/ oder Anpassung eine Empfindlichkeit des Bauteils gegenüber der Auslösung von parasitären Thyristoren und/ oder der Auslösung von parasitären bipolaren Transistoren ist, und diese Empfindlichkeit größer ist, als ein Grenzwert (10), dadurch, dass es bei der Herstellung eine Auswahl von Parametern umfasst, die geeignet sind, die Empfindlichkeit des Bauteils gegenüber der Auslösung von parasitären Thyristoren und/ oder der Auslösung eines parasitären bipolaren Transistors zu begünstigen, und dadurch, dass die Auswahl eine solche ist, dass ein Energiegrenzwert (10) zur Auslösung eines parasitären Thyristors und/ oder zur Auslösung eines parasitären bipolaren Transistors kleiner ist, als eine Energiemenge (11), die für die Statusänderung einer Kippschaltung des Bauteils nötig ist.
